# EUROPÄISCHE PATENTANMELDUNG

(11) **EP 3 524 378 A2**
(43) Veröffentlichungstag der Anmeldung: **14.08.2019**
(21) Anmeldenummer: 19154371.9
(22) Anmeldetag: 30.01.2019
(51) Int. Cl.: B23K 3/03

(54) **ELEKTRISCHES LÖTGERÄT, INSBESONDERE LÖTKOLBEN**

(30) Priorität: 08.02.2018 DE 102018102792
(71) Anmelder: Ersa GmbH, 97877 Wertheim (DE)
(72) Erfinder: WEISSENBERGER, Eugen, 97776 Eussenheim (DE)
(74) Vertreter: DREISS Patentanwälte PartG mbB

(57) **Zusammenfassung**

Die Erfindung betrifft ein elektrisches Lötgerät (10, 50, 60, 70), insbesondere Lötkolben, mit einem Griffabschnitt (12), mit einem am Griffabschnitt befestigten Heizelement (36), mit einer hohl ausgebildeten Lötspitze (14), in die das Heizelement eingreift und mit Befestigungsmitteln zur lösbaren Befestigung der Lötspitze (14) am Griffabschnitt (12), wobei die Befestigungsmittel einen das Heizelement (36) umgebenden Dauermagneten (40) und ein mit dem Dauermagneten (40) zusammenwirkendes, das Heizelement (36) umgebendes ferromagnetisches Halteteil (28) derart umfassen, dass das Halteteil (28) verdrehsicher am Dauermagneten (40) anordenbar ist. Die Erfindung betrifft außerdem ein Lötsystem, umfassend ein Lötgerät nach einem der vorhergehenden Ansprüche sowie eine Abziehvorrichtung zum Abziehen der Lötspitze vom Griffabschnitt.

## Beschreibung

Die Erfindung betrifft ein elektrisches Lötgerät, insbesondere einen Lötkolben, mit einem Griffabschnitt, mit einem am Griffabschnitt befestigten Heizelement, mit einer hohl ausgebildeten Lötspitze, in die das Heizelement eingreift und mit Befestigungsmitteln zur lösbaren Befestigung der Lötspitze am Griffabschnitt.

Derartige Lötgeräte, insbesondere Lötkolben, sind in vielfältiger Art und Weise bekannt. Am Griffabschnitt kann das Lötgerät insbesondere von einer menschlichen Person gehalten und geführt werden. Durch Vorsehen des Heizelements wird die Lötspitze zum Schmelzen von Lot erhitzt. Je nach Lötaufgabe sind unterschiedlich geometrisch ausgebildete Lötspitzen vorzusehen. Lötspitzen können deshalb lösbar am Griffelement angeordnet sein. Bekannt sind Schraubverbindungen, Bajonett-Verbindungen sowie Rastsysteme.

Der vorliegenden Erfindung liegt die Aufgabe zugrunde, ein Lötgerät sowie ein Lötsystem bereitzustellen, das eine temperaturbeständige Lötspitze vorsieht, die auf einfache Art und Weise austauschbar ist.

Diese Aufgabe wird gelöst durch ein elektrisches Lötgerät mit den Merkmalen des Patentanspruchs 1. Folglich ist vorgesehen, dass die Befestigungsmittel einen das Heizelement umgebenden Dauermagneten und ein mit dem Dauermagneten zusammenwirkendes, das Heizelement umgebendes ferromagnetisches Halteteil derart umfassen, dass das Halteteil verdrehsicher am Dauermagneten anordenbar ist. Durch Vorsehen des Dauermagneten und des Halteteils kann folglich die Lötspitze sicher am Griffabschnitt befestigt werden. Der Dauermagnet sowie das ferromagnetische Halteteil sind dabei aus einem derartigen Material, das den Löttemperaturen Stand hält. Dadurch, dass der Dauermagnet sowie das Halteteil das Heizelement umgeben, kann sichergestellt werden, dass das Heizelement zur Aufheizung der Lötspitze in der hohlen Lötspitze bis an deren freies Ende geführt werden kann. Das ferromagnetische Halteteil ist dabei so ausgebildet, dass es vom Dauermagneten angezogen wird. Das Halteteil kann dabei ebenfalls als Dauermagnet ausgebildet sein. Die Ausbildung des Dauermagneten und des Halteteils ist dabei derart, dass die Bauteile gegenseitig verdrehsicher angeordnet sind, wodurch eine unerwünschte Drehbewegung der Lötspitze um die Längsachse bei auf den Griffabschnitt aufgesetzter Lötspitze unterbunden werden kann.

Aufgrund des einfachen Austausches der Lötspitze erhöht sich insgesamt die Handhabungssicherheit, auch weil keine zusätzlichen Werkzeuge zum Austauschen der Lötspitze benötigt werden. Zudem kann die Lötspitze auch während des Lötens, also bei Betriebstemperatur, ohne weiteres ausgetauscht werden. Da an der Lötspitze hohe Temperaturen mit zum Teil bis 600° auftreten können, haben sich als geeignete Legierungen für Dauermagneten erwiesen: AlNiCo, SE-Co, Ba-Ferrit, Sr-Ferrit, NdFeB. Hierbei ist zu beachten, dass im Betrieb die Magnete unterhalb ihrer spezifischen Curietemperatur betrieben werden und dass deren Feldstärke sich unter Temperatureinfluss nur geringfügig ändert.

Vorteilhafterweise sind der Dauermagnet und/oder das Halteteil ringartig ausgebildet und weisen einen Innendurchmesser auf, der größer oder gleich ist als der Außendurchmesser des Heizelements. Beim Vorsehen eines größeren Innendurchmesser kann gewährleistet werden, dass das Heizelement sicher durch den Dauermagneten und/oder das Halteteil hindurchgeführt werden kann, ohne dass es zu Berührkontakten kommt. Beim Vorsehen eines Innendurchmesser, der gleich dem Außendurchmesser des Heizelementen, kann der Dauermagnet und/oder das Halteteil direkt am Heizelement befestigt werden.

Weiterhin ist vorteilhaft, wenn der Dauermagnet entlang seines Umfangs unterschiedliche Polarisierungen derart aufweist, dass das Halteteil am Dauermagnet verdrehgesichert anordenbar ist. Dadurch kann eine Drehbewegung der Lötspitze bei auf den Griffabschnitt aufgesetzter Lötspitze unterbunden werden. Dabei kann auch - wie bereits erwähnt - das Halteteil eine Dauermagnetisierung aufweisen, die vorzugsweise komplementär zur Magnetisierung des Dauermagneten ist. Aufgrund der entsprechenden Polarisierung des Dauermagneten ist ein Verdrehen der Lötspitze um die Längsachse des Lötkolbens nicht, oder nur bei Überwindung einer entsprechend hohen magnetischen Kraft möglich.

Um eine Verdrehsicherung der Lötspitze gegenüber dem Griffabschnitt zu unterbinden, ist ebenfalls vorteilhaft, wenn am Dauermagnet und/oder am Halteteil formschlüssig miteinander zusammenwirkende Kontaktabschnitte vorgesehen sind. Die Kontaktabschnitte greifen bei auf den Griffabschnitt aufgesetzter Lötspitze ineinander ein, so dass die Lötspitze gegenüber dem Griff nicht verdreht werden kann.

Dabei ist denkbar, dass der Dauermagnet einen Kontaktabschnitt aufweist, der von einer Innen- bzw. Außenkontur des Dauermagneten gebildet wird und dass das Halteteil einen Kontaktabschnitt aufweist, der zum Kontaktabschnitt des Dauermagneten komplementär ausgebildet ist und an der Außenkontur bzw. Innenkontur des Halteteils vorgesehen ist. Die Konturen sind vorzugsweise so ausgebildet, dass sie in Längsrichtung der Lötspitze gefügt bzw. getrennt werden können.

Eine vorteilhafte Ausbildung ergibt sich dadurch, wenn die Innenkontur des Dauermagneten bzw. des Halteteils als Innenkant ausgebildet ist und wenn die Außenkontur des Halteteils bzw. des Dauermagneten als Außenkant ausgebildet ist. Bei dem Innenkant kann es sich insbesondere um einen Innendreikant, Innenvierkant oder Innensechskant. Bei dem Außenkant kann es sich insbesondere um einen Außendreikant, Außenvierkant oder Außensechskant handeln. Eine andere Anzahl von "Kanten" ist ebenfalls denkbar. Vorteilhafterweise kann dann die Lötspitze in Längsrichtung auf den Griffabschnitt so aufgesetzt werden, dass die jeweiligen Konturen miteinander zur Verdrehsicherung zusammenwirken.

Ferner ist denkbar, dass das Halteteil sowie der Dauermagnet jeweils einen Innendurchmesser aufweisen, wobei die Innendurchmesser zumindest weitgehend gleich groß sind. Eine vorteilhafte Ausbildung hat sich dann ergeben, wenn der Innendurchmesser des Dauermagneten das 1,5- bis 2,5-fache oder das 1,9- bis 2,1-fache des Außendurchmessers des Heizelements beträgt. Hierdurch ergeben sich günstige Abstände, bei denen eine zu große Aufheizung des Dauermagneten vermieden wird.

Der Dauermagnet kann am Griffabschnitt oder an der Lötspitze angeordnet sein, wobei dann das Halteteil an der Lötspitze oder am Griffabschnitt vorzusehen ist.

Denkbar ist, dass die Lötspitze eine Überwurfmutter mit einem Innengewinde aufweist, und dass das Halteteil oder der Dauermagnet ein zum Innengewinde komplementäres Außengewinde für dessen Befestigung an der Lötspitze aufweist. Die Überwurfmutter kann dabei fest oder drehbar an der Lötspitze angeordnet sein.

Ferner ist denkbar, dass das Halteteil und/oder der Dauermagnet einen nach radial außen ragenden Ringbund zur Anlage an die Lötspitze oder an den Griffabschnitt aufweisen. Hierdurch kann ein definiertes Positionieren des Halteteils bzw. des Dauermagneten erreicht werden.

Ferner kann vorgesehen sein, dass der Dauermagnet oder das Halteteil am Heizelement befestigt sind. Eine Befestigung kann insbesondere durch Aufschrauben oder Verrasten möglich sein. Die Materialien sind allerdings so zu wählen, dass eine zu starke Aufheizung des Dauermagneten unterbunden wird.

Die eingangs genannte Aufgabe wird auch gelöst durch ein Lötsystem mit einem erfindungsgemäßen Lötgerät, wobei eine Abziehvorrichtung zum Abziehen der Lötspitze vom Griffabschnitt vorgesehen ist. Durch Vorsehen der Abziehvorrichtung kann während des Betriebs des Lötgeräts die Lötspitze sicher abgezogen werden, ohne dass zusätzliche Werkzeuge erforderlich sind.

Weitere Einzelheiten und Ausgestaltungen der Erfindung sind der nachfolgenden Beschreibung zu entnehmen, anhand derer verschiedene Ausführungsformen der Erfindung näher beschrieben und erläutert sind.

Es zeigen:
- Figur 1: ein erstes erfindungsgemäßes Lötgerät;
- Figur 2: die Lötspitze des Lötgeräts gemäß Figur 1;
- Figur 3: den Griffabschnitt samt Heizelement des Lötgeräts gemäß Figur 1;
- Figur 4: eine Vergrößerung des Ausschnitts IV aus Figur 1;
- Figur 5: ein zweites erfindungsgemäßes Lötgerät;
- Figur 6: die Lötspitze des Lötgeräts gemäß Figur 5;
- Figur 7: den Griffabschnitt samt Heizelement des Lötgeräts gemäß Figur 5;
- Figur 8: ein drittes erfindungsgemäßes Lötgerät;
- Figur 9: die Lötspitze des Lötgeräts gemäß Figur 8;
- Figur 10: den Griffabschnitt samt Heizelement des Lötgeräts gemäß Figur 8;
- Figur 11: ein viertes erfindungsgemäßes Lötgerät; und
- Figur 12: eine Vergrößerung aus Figur 11.

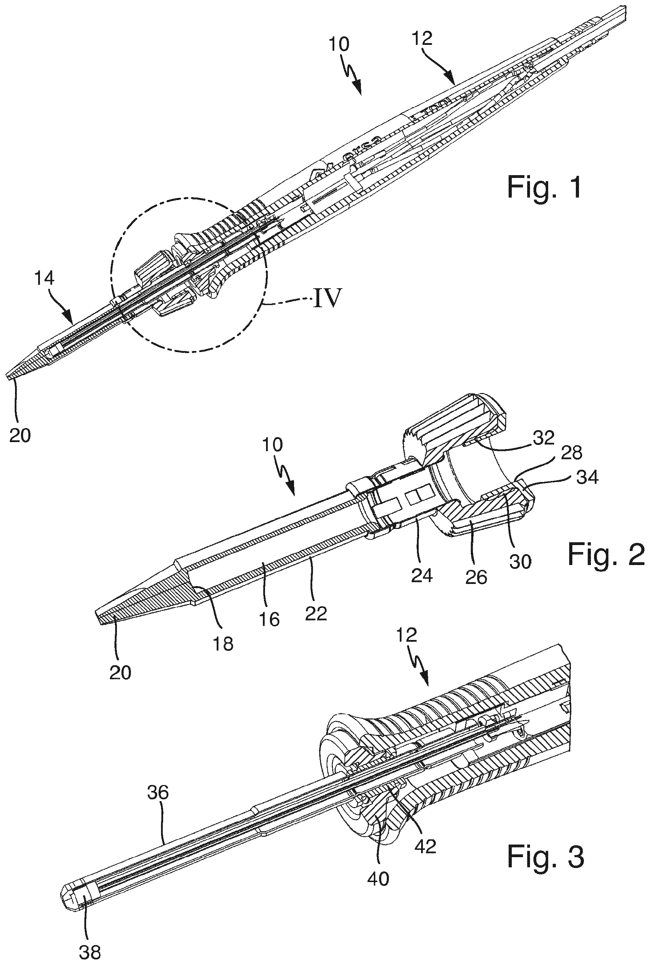

In den Figuren 1 bis 4 ist eine erste Ausführungsform eines erfindungsgemäßen Lötkolbens 10 gezeigt. Der Lötkolben 10 weist einen Griffabschnitt 12 und eine Lötspitze 14 auf. Die Lötspitze 14 ist dabei lösbar am Griffabschnitt 10 angeordnet. Wie aus Figur 2 deutlich wird, die die Lötspitze 14 als Einzelteil zeigt, weist die Lötspitze 14 einen sich in Längsrichtung des Lötkolbens 10 erstreckenden Hohlraum 16 mit einem Boden 18 auf. Der Boden 18 ist dabei dem freien Ende 20 der Lötspitze 14 benachbart angeordnet. Die Lötspitze 14 wird insgesamt gebildet von einem Spitzenteil 22, einem Hülsenteil 24 und einer Überwurfmutter 26, in die ein ferromagnetisches Halteteil 28 eingeschraubt ist. Die Überwurfmutter 26 weist dazu ein Innengewinde 30 auf. Das Halteteil 28 weist an seinem Außenumfang ein mit dem Innengewinde 30 zusammenwirkendes Außengewinde 32 auf. Die Überwurfmutter 26 kann beispielsweise aus einem Duroplast sein, das Hülsenteil 24, das die Überwurfmutter 26 mit dem Spitzenteil 22 verbindet, kann insbesondere aus einem geeigneten Edelstahl sein.

Wie aus dem Schnitt gemäß Figur 2 deutlich wird, weist das Halteteil 28 einen nach radial außen ragenden, umlaufenden Ringbund 34 auf.

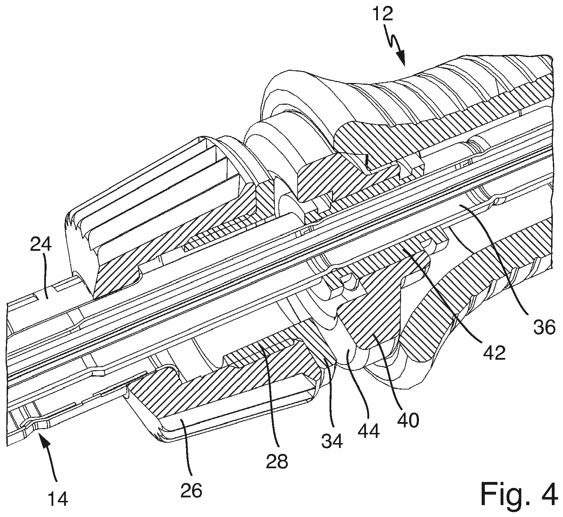

In Figur 3 ist der Griffabschnitt 12 gezeigt, an dem ein sich in Längsrichtung erstreckendes Heizelement 36 befestigt ist. Das Heizelement 36 weist ein freies Endes 38 auf, welches bei aufgesetzter Lötspitze 14 den Boden 18 des Hohlraums 16 gegenüberliegend angeordnet ist. Am Griffabschnitt 12 ist zudem ein ringartig ausgebildeter Dauermagnet 40 vorgesehen. Der Dauermagnet 40 ist, wie insbesondere aus der Vergrößerung gemäß Figur 4 deutlich wird, über eine Buchse 42 am Heizelement 36 befestigt. Das Heizelement 36 ist sicher im Griffabschnitt 12 verankert.

Wie ebenfalls aus Figur 4 deutlich wird, in der die Lötspitze 14 auf den Griffabschnitt 12 aufgesetzt ist, weist der Dauermagnet 40 eine quer zur Längserstreckung des Kolbens 12 verlaufende Oberseite 44 auf, die mit dem Ringbund 34 des Halteteils 28 derart zusammenwirkt, dass die Lötspitze 14 aufgrund von magnetischen Kräften am Griffabschnitt 12 gehalten wird. Das Heizelement 36 erstreckt sich sowohl durch den Dauermagneten 40 als auch durch das mit dem Dauermagneten 40 zusammenwirkende Halteteil 28.

Um eine Verdrehsicherung der Lötspitze 14 gegenüber dem Griffabschnitt 12 zu erreichen, ist denkbar, den Dauermagneten 40 entlang seines Umfangs unterschiedlich zu polarisieren. Dadurch kann eine Drehbewegung der Lötspitze 14 bei auf den Griffabschnitt 12 aufgesetzter Lötspitze 14 unterbunden werden. Aufgrund der entsprechenden Polarisierung des Dauermagneten ist ein Verdrehen der Lötspitze um die Längsachse des Lötkolbens nicht, oder nur bei Überwindung einer entsprechend hohen magnetischen Kraft möglich.

Zum Entfernen der Lötspitze 14 kann diese in Längsrichtung des Lötkolbens 10 von diesem auf einfache Art und Weise abgezogen werden. Zum Abnehmen der Lötspitze 14 sind folglich keine weiteren Werkzeuge erforderlich.

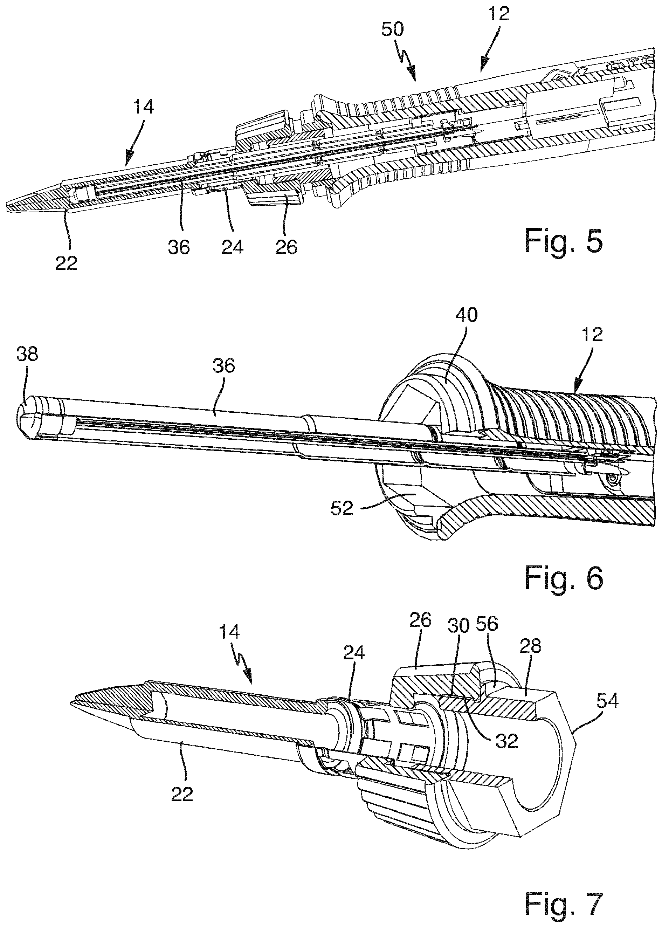

In den Figuren 4 bis 7 ist ein weiterer erfindungsgemäßer Lötkolben 50 gezeigt, wobei die dem Lötkolben 10 entsprechenden Bauteile mit entsprechenden Bezugszeichen versehen sind. Figur 6 zeigt den Griffabschnitt 12 des Lötkolbens 50 und Figur 7 dessen Lötspitze 14.

Wie insbesondere aus Figur 6 deutlich wird, unterscheidet sich der Lötkolben 50 vom Lötkolben 10 dadurch, dass der Dauermagnet 40 nicht am Heizelement 34 angeordnet ist, sondern unmittelbar am Griffabschnitt 12.

Zudem weist der Dauermagnet 40 an seiner nach radial innen gewandten Seite einen Kontaktabschnitt 52 auf, der als Innensechskant ausgebildet ist. Wie aus Figur 7 deutlich wird, weist das Halteteil 28 einen Kontaktabschnitt 54 auf, der als an der Außenkontur vorgesehener Außensechskant ausgebildet ist. Bei auf den Griffabschnitt aufgesetzter Lötspitze 14 befindet sich der Kontaktabschnitt 54 der Lötspitze 14 im Kontaktabschnitt 12, wodurch eine Verdrehsicherung mit der Lötspitze 14 gegenüber dem Griffabschnitt 12 gegeben ist. Der Außensechskant des Halteteils 28 greift folglich in den Innensechskant des Dauermagneten 40. Aufgrund des vom Dauermagneten 40 erzeugten Magnetfeldes wird das Halteteil 28 bzw. die gesamte Lötspitze 14, sicher am Griffabschnitt 12 gehalten. Zur sicheren Positionierung des Halteteils 28 an der Überwurfmutter 26 weist das Halteteil 28 einen nach radial außen ragenden Ringbund 56 auf.

Um eine Verdrehsicherung der Lötspitze 14 gegenüber dem Griffabschnitt 12 zu erreichen, ist - wie beim Lötkolben 10 - denkbar, den Dauermagneten 40 entlang seines Umfangs unterschiedlich zu polarisieren, um eine Drehbewegung der Lötspitze 14 bei auf den Griffabschnitt 12 aufgesetzter Lötspitze 14 zu unterbinden.

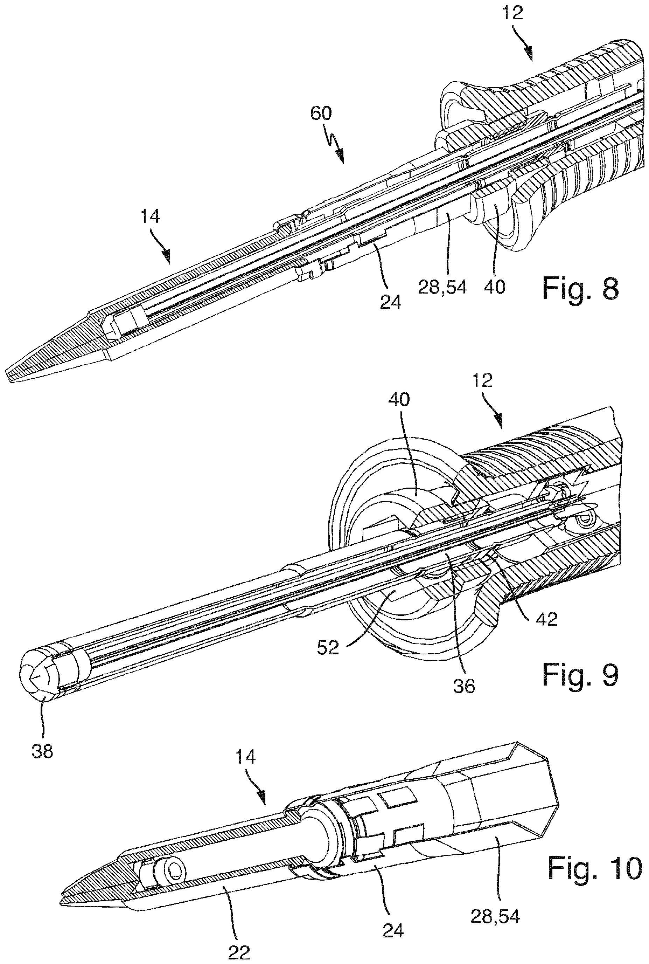

In den Figuren 8 bis 10 ist eine weitere Ausführungsform eines erfindungsgemäßen Lötkolbens 60 gezeigt. Dem Lötkolben 10 entsprechende Bauteile sind mit entsprechenden Bezugszeichen versehen.

Entsprechend dem Lötkolben 10 ist beim Lötkolben 60 der Dauermagnet 40 über die Buchse 42 am Heizelement 36 befestigt. Der Dauermagnet 40 kann insbesondere auf die Buchse 42 aufgeschraubt sein. Die Buchse 42 kann ihrerseits am Heizelement 36 durch eine Schraubverbindung, durch eine Pressverbindung oder durch eine stoffschlüssige Verbindung befestigt sein. Der Dauermagnet 40 weist, entsprechend der Ausführungsform des Lötkolbens 50, auf seiner Innenseite einen Kontaktabschnitt 52 mit einem Innensechskant auf, was insbesondere aus Figur 9 deutlich wird.

In Figur 10 ist zu erkennen, dass beim Lötkolben 60 das Hülsenteil 24 auf seiner dem Spitzenteil 22 abgewandten Seite das Halteteil 28 bildet. Dazu ist der dem Spitzenteil 22 abgewandte Abschnitt des Hülsenteils 24 als Kontaktabschnitt 54 in Form eines Außensechskants ausgebildet. Bei auf den Griffabschnitt 12 aufgesetzter Lötspitze 14 taucht, wie in Figur 8 zu erkennen ist, das Halteteil 28, bzw. der Kontaktabschnitt 54 formschlüssig in den Dauermagneten 40 ein. Aufgrund der Magnetkraft wird die Lötspitze 14 sicher am Griffabschnitt 12 befestigt.

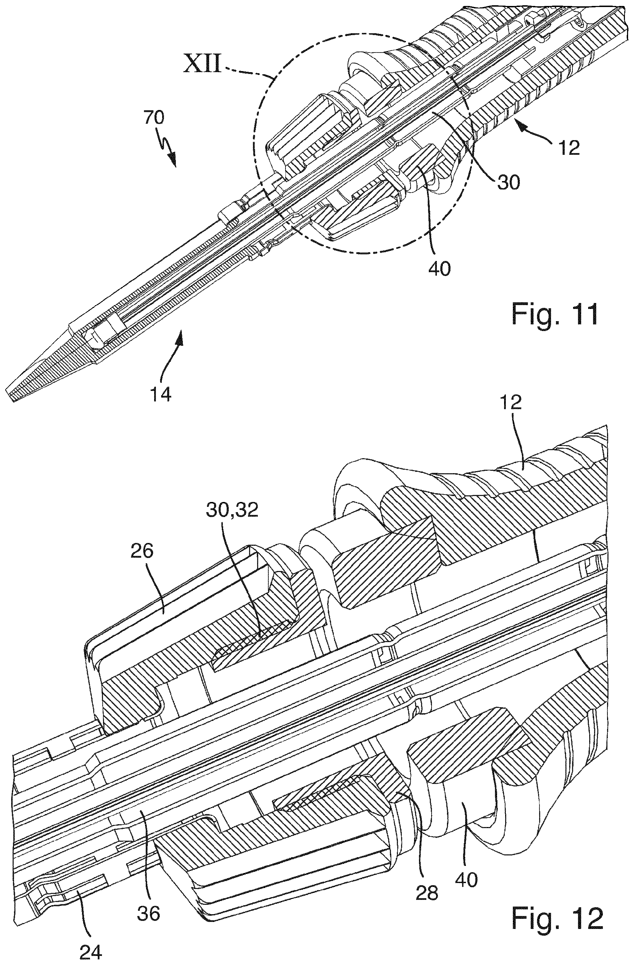

In den Figuren 11 und 12 ist ein weiterer erfindungsgemäßer Lötkolben 70 gezeigt, wobei die den Lötkolben 10 entsprechenden Bauteile mit entsprechenden Bezugszeichen versehen sind. Im Unterschied zum Lötkolben 10 ist beim Lötkolben 70 der Dauermagnet 40 unmittelbar am Griffabschnitt 12 befestigt, und nicht am Heizelement 36. Im montierten Zustand der Lötspitze 14 wirkt der Dauermagnet 40 mit dem Halteteil 28 so zusammen, dass die Lötspitze 14 sicher am Griffabschnitt 12 befestigt ist.

Wenn auch bei den gezeigten Ausführungsformen der Dauermagnet 40 stets am Griffabschnitt angeordnet ist, ist es erfindungsgemäß denkbar, den Dauermagneten 40 an der Lötspitze 14 und das Halteteil 28 am Griffabschnitt 12 vorzusehen. Ferner ist denkbar, dass das Halteteil 28 ebenfalls aus einem dauermagnetisierten ferromagnetischen Material ist. Wie aus den Figuren deutlich wird, umgibt der Dauermagnet 14 sowie das Halteteil 28 das Heizelement 36.

## Patentansprüche

1. Elektrisches Lötgerät (10, 50, 60, 70), insbesondere Lötkolben, mit einem Griffabschnitt (12), mit einem am Griffabschnitt befestigten Heizelement (36) und mit einer hohl ausgebildeten Lötspitze (14), in die das Heizelement (36) eingreift und mit Befestigungsmitteln zur lösbaren Befestigung der Lötspitze (14) am Griffabschnitt (12), **dadurch gekennzeichnet, dass** die Befestigungsmittel einen das Heizelement (36) umgebenden Dauermagneten (40) und ein mit dem Dauermagneten (40) zusammenwirkendes, das Heizelement (36) umgebendes ferromagnetisches Halteteil (28) derart umfassen, dass das Halteteil (28) verdrehsicher am Dauermagneten (40) anordenbar ist.

2. Lötgerät (10, 50, 60, 70) nach Anspruch 1, **dadurch gekennzeichnet, dass** der Dauermagnet (40) und/oder das Halteteil (28) ringartig ausgebildet sind und einen Innendurchmesser aufweisen, der größer oder gleich ist als der Außendurchmesser des Heizelements (36).

3. Lötgerät (10, 50, 60, 70) nach Anspruch 1 oder 2, **dadurch gekennzeichnet, dass** zur gegenseitigen Verdrehsicherung der Dauermagnet (40) entlang seines Umfangs unterschiedliche Polarisierungen aufweist.

4. Lötgerät (10, 50, 60, 70) nach einem der vorhergehenden Ansprüche, **dadurch gekennzeichnet, dass** zur gegenseitigen Verdrehsicherung am Dauermagnet (40) und/oder am Halteteil (28) formschlüssig miteinander zusammenwirkende Kontaktabschnitte (52, 54) vorgesehen sind.

5. Lötgerät (10, 50, 60, 70) nach Anspruch 4, **dadurch gekennzeichnet, dass** der Dauermagnet (40) als Kontaktabschnitt (52) eine Innen- bzw. Außenkontur aufweist und dass das Halteteil (28) als Kontaktabschnitt (52) eine dazu komplementär ausgebildete Außen- bzw. Innenkontur aufweist.

6. Lötgerät (10, 50, 60, 70) nach Anspruch 5, **dadurch gekennzeichnet, dass** die Innenkontur des Dauermagneten (40) bzw. des Halteteils (28) als Innenkant ausgebildet ist und dass die Außenkontur des Halteteils (28) bzw. des Dauermagneten (40) als Außenkant ausgebildet ist.

7. Lötgerät (10, 50, 60, 70) nach einem der vorhergehenden Ansprüche, **dadurch gekennzeichnet, dass** das Halteteil (28) ringartig ausgebildet ist und einen Innendurchmesser aufweist, der dem Innendurchmesser des Dauermagneten (40) entspricht.

8. Lötgerät (10, 50, 60, 70) nach einem der vorhergehenden Ansprüche, **dadurch gekennzeichnet, dass** der Dauermagnet (40) bzw. das Halteteil (28) am Griffabschnitt (12) und das Halteteil (28) bzw. der Dauermagnet (40) an der Lötspitze (14) angeordnet sind.

9. Lötgerät (10, 50, 60, 70) nach einem der vorhergehenden Ansprüche, **dadurch gekennzeichnet, dass** an der Lötspitze (14) eine Überwurfmutter (26) mit einem Innengewinde (30) vorgesehen ist und dass das Halteteil (28) oder der Dauermagnet (40) ein zum Innengewinde (30) komplementäres Außengewinde (32) aufweist.

10. Lötgerät (10, 50, 60, 70) nach einem der vorhergehenden Ansprüche, **dadurch gekennzeichnet, dass** das Halteteil (28) und/oder der Dauermagnet (40) einen nach radial außen ragenden Ringbund (34, 56) zur Anlage an die Lötspitze oder an den Griffabschnitt (12) aufweisen.

11. Lötgerät (10, 50, 60, 70) nach einem der vorhergehenden Ansprüche, **dadurch gekennzeichnet, dass** der Dauermagnet (40) oder das Halteteil (28) am Heizelement (36) befestigt sind.

12. Lötsystem, umfassend ein Lötgerät (10, 50, 60, 70) nach einem der vorhergehenden Ansprüche sowie eine Abziehvorrichtung zum Abziehen der Lötspitze (14) vom Griffabschnitt (12).
